# EUROPÄISCHE PATENTANMELDUNG

(11) **EP 1 790 870 A2**
(43) Veröffentlichungstag der Anmeldung: **30.05.2007**
(21) Anmeldenummer: 06023549.6
(22) Anmeldetag: 13.11.2006
(51) Int. Cl.: F16D 23/12

(54) **Kupplungsbetätigungsvorrichtung**

(30) Priorität: 24.11.2005 DE 102005056028
(71) Anmelder: LuK Lamellen und Kupplungsbau Beteiligungs KG, 77815 Bühl (DE)
(72) Erfinder: Mán, Lászlo, Dr., 77833 Ottersweier-Unzhurst (DE)

(57) **Zusammenfassung**

Die Erfindung betrifft eine Kupplungsbetätigungsvorrichtung, insbesondere zur Betätigung einer Kupplung oder einer Getriebebremse eines Fahrzeuges, mit mindestens einer Feder, deren Federkraft zur Betätigung der Kupplung mittels einer zugeordneten mechanischen Kraftübertragungsstrecke auf die Kupplung übertragbar ist, wobei die Kraftübertragungsstrecke zumindest ein verlagerbares Kraftübertragungselement umfasst, welches als tangential zu einer Rotationsachse der Kupplung angeordneter kugelgelenkartig gelagerter Hebel ausgebildet ist. Vorzugsweise sind mehrere Kraftübertragungselemente gleichmäßig über den Umfang verteilt vorgesehen.

## Beschreibung

Die vorliegende Erfindung betrifft eine Kupplungsbetätigungsvorrichtung gemäß dem Oberbegriff des Patentanspruchs 1.

Zurzeit werden Kupplungen beispielsweise mittels eines Hebels betätigt, der eine unveränderliche Hebellänge besitzt und beispielsweise mittels eines elektromotorischen Antriebs zum Öffnen und/oder Schließen der Kupplung angetrieben wird. Wenn nun über den Verfahrweg der Kupplungsbetätigung eine veränderliche Betätigungskraft aufgebracht werden soll, ist zu diesem Zweck der Elektromotor, um ein entsprechend hohes Moment zur Verfügung zu stellen, mit entsprechenden Stromwerten zu beaufschlagen. Eine andere Möglichkeit der Kupplungsbetätigung besteht beispielsweise in der Form eines von einem Elektromotor angetriebenen Zentralausrückers, wobei auch hier der Elektromotor mit hohen Stromwerten bestromt werden muss, um entsprechend hohe Abtriebsmomente zur Verfügung zu stellen. Darüber hinaus ist es erforderlich, den Elektromotor - um eine Beschädigung der Kupplungsbetätigungsaktorik zu vermeiden - nach dem Schließen der Kupplung schnell abzubremsen.

Um nun diese Problematik zu umgehen, wurde von der Anmelderin ein unter der DE 10 2004 009 832 A1 beschriebenes Hebelsystem zum Betätigen von Kupplungen geschaffen. Das dort beschriebene weist Hebelarme mit veränderbaren Hebellängen auf, wobei zu diesem Zweck der den Hebel abstützende Hebel-Drehpunkt entlang des Betätigungshebels verlagert werden kann und sich somit bei unveränderlichem Krafteinleitungspunkt in den Hebelarm in Abhängigkeit von der Verlagerung des Hebel-Drehpunkts verschiedene wirksame Hebellängen ergeben. Obwohl ein solches Hebelsystem bereits vielfache Vorteile gegenüber bekannten Kupplungsbetätigungsvorrichtungen aufweist, lässt es trotzdem Raum für deutliche Verbesserungen. Das nach dieser Offenlegungsschrift bekannte Hebelsystem wird an dem Krafteinleitungspunkt der Betätigungskraft in den Hebelarm mit einer vorbestimmbaren Kraft durch den Energiespeicher, z.B. eine Feder beaufschlagt. Ausgangsseitig, d. h. also beispielsweise auf der Seite eines Axiallagers wirkt eine entsprechende, zur in den Betätigungshebel eingeleiteten Federkraft komplementäre Reaktionskraft.

Während der Lebensdauer eines solchen Kupplungssystems kann sich die Ausrückkraftkennlinie stark verschieben, zum Beispiel durch Belagverschleiß. Das ist ein Nachteil bei der Kraftkompensierung in einem solchen Kupplungssystem. Deswegen wäre es vorteilhaft, das Ausrücksystem der Kennlinienverschiebung entsprechend immer "mitwandern" zu lassen. Das gleiche Problem hat man auch bei der Erstmontage der Kupplung, wo man zuerst die optimale axiale Position eines Ausrückers zu finden hat. Sie ist über die Lebensdauer auch nicht mehr zu verändern. Andererseits wäre es auch wünschenswert, die axiale Position des Ausrückers nicht nur in Richtung Kupplung, sondern auch in Richtung Getriebe verändern zu können. Dadurch besteht dann die Möglichkeit, eine ungenaue oder sogar ungewollte Verstellung wieder zurückändern zu können oder einen zu groben Verschleißnachstellschritt in der Kupplung und dadurch die Änderung einer Tellerfederzungenposition besser kompensieren zu können. So könnten die Dimensionen eines Elektromotors kleiner gewählt werden.

Ausgehend vom oben genannten Stand der Technik besteht daher die Aufgabe der vorliegenden Erfindung darin, ein Ausrücksystem in Form einer Kupplungsbetätigungsvorrichtung zu schaffen, welche eine Kompensation der Kupplungskennlinienverschiebung ermöglicht.

Diese Aufgabe wird gelöst durch eine Kupplungsbetätigungsvorrichtung mit den Merkmalen des Patentanspruchs 1.

Demnach weist die erfindungsgemäße Kupplungsbetätigungsvorrichtung, insbesondere zur Betätigung einer Kupplung eines Fahrzeuges, mindestens eine Feder auf deren Federkraft zur Betätigung der Kupplung mittels einer zugeordneten mechanischen Kraftübertragungsstrecke auf die Kupplung übertragbar ist, wobei die Kraftübertragungsstrecke zumindest ein verlagerbares Kraftübertragungselement umfasst, welches als tangential zu einer Rotationsachse der Kupplung angeordneter kugelgelenkartig gelagerter Hebel ausgebildet ist.

Das Ausrücksystem ist rotatorisch um die Zentralachse angeordnet und kann auch rotatorisch betätigt werden. Der bzw. die (Ausrück-) Hebel sind tangential um die Rotationsachse der Kupplung angeordnet. Hierdurch wird einerseits der kompakte Aufbau der Kupplungsbetätigungsvorrichtung ermöglicht als auch andererseits eine nur geringe Betätigungskraft zum Verlagern der tangential angeordneten Hebel notwendig ist.

Vorzugsweise sind die mehreren Hebel, besonders bevorzugt dreifach, am Umfang gleichmäßig verteilt vorgesehen, wobei die Hebel jeweils bevorzugt durch eine Rolleneinheit betätigt werden. Jede Rolleneinheit wird vorzugsweise auf einer Kreisbahn bewegt und betätigt den Hebel, der an zwei weiteren Abstützpunkten gelagert ist.

Besonders bevorzugt sind alle Rolleneinheiten aller Hebel in einem gemeinsamen Rollenhalter gelagert, der vorteilhafterweise mittels eines Elektromotors betätigbar, d.h. verdrehbar ist.

Durch Verdrehen der Rolleneinheit wird der zugeordnete Hebel verlagert und dadurch wird das Hebelverhältnis zwischen der Feder und einer erfindungsgemäßen Hilfstellerfeder verändert.

Bevorzugt wird eine axiale Position der Kraftübertragungsstrecke als Teil eines Ausrücksystems zwischen Getriebe und Kupplung mittels des Elektromotors verstellt, wobei die Verstellung der axialen Position zur Kompensation der Kupplungskennlinienverschiebung dient.

Das erfindungsgemäße Ausrücksystem lässt sich sowohl in Richtung Kupplung als auch in Richtung Getriebe axial verschieben, so dass eine Ersteinstellung des Ausrücksystems, das so genannte "shimming", wegfällt. In den konkreten Ausführungsformen ist die Anwendung als schwere LKW-Kupplung gezeigt.

Die Erfindung soll nachfolgend und unter Bezugnahme auf die zugehörigen Zeichnungen näher erläutert werden.

Es zeigen:
Figur 1 ein Schnittbild eines Ausrücksystems in Form einer Kupplungsbetätigungsvorrichtung nach einer bevorzugten Ausführungsform der vorliegenden Erfindung gezeigt;
Figur 2 eine perspektivische Ansicht der erfindungsgemäße Kupplungsbetätigungsvorrichtung nach Figur 1;

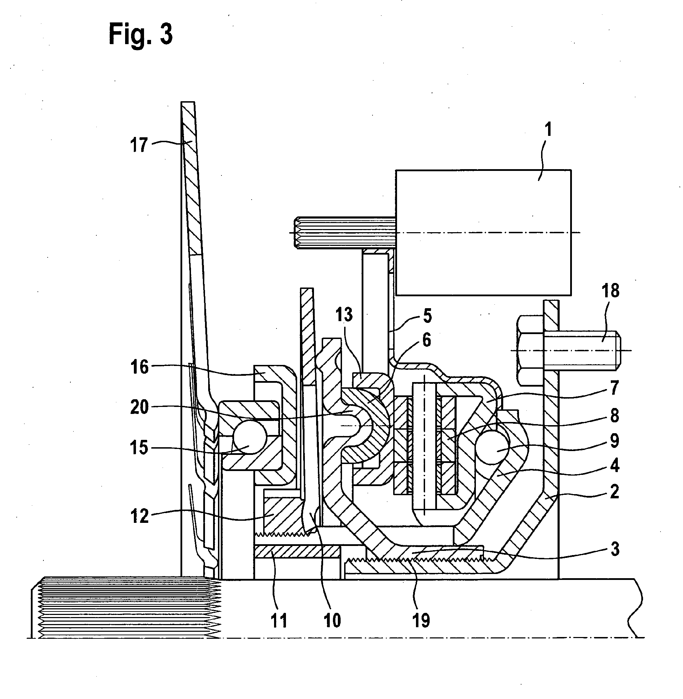

Figur 3 eine obere Hälfte dieser Kupplungsbetätigungsvorrichtung in einer Schnittansicht ;

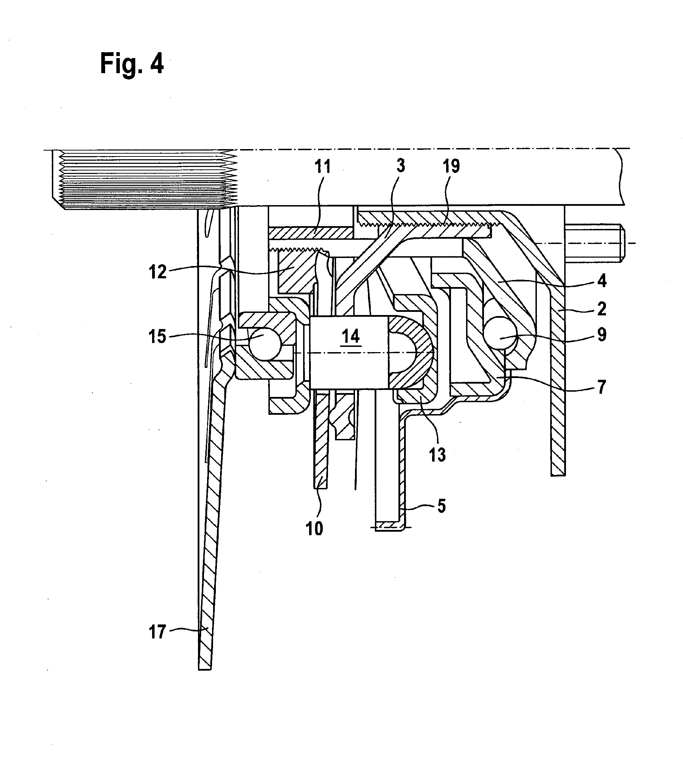

Figur 4 eine untere Hälfte dieser Kupplungsbetätigungsvorrichtung in einer Schnittansicht ;

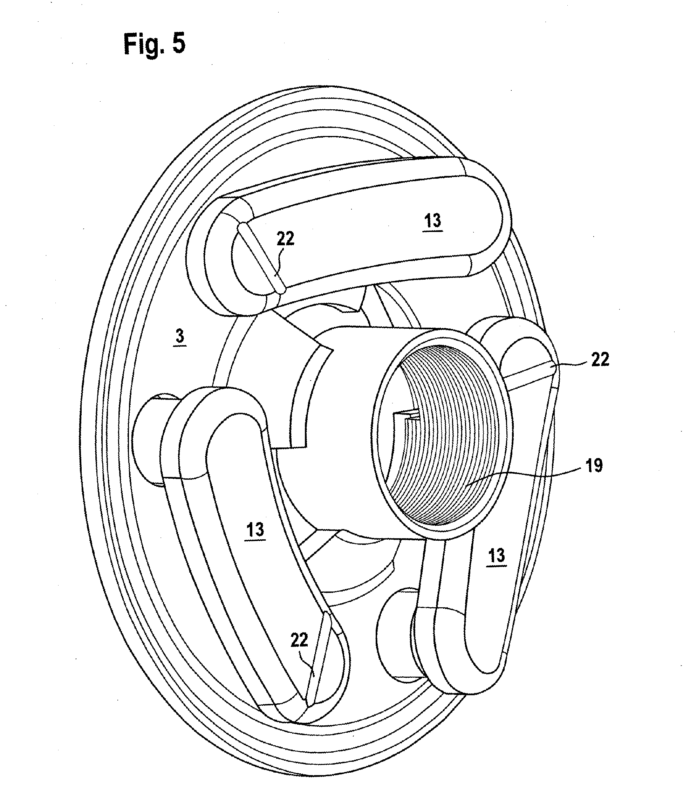

Figur 5 eine Hebelanordnung der Kupplungsbetätigungsvorrichtung in einer perspektivischen Ansicht;
Figur 6 eine perspektivische Ansicht einer Hebel-Rolleneinheit der erfindungsgemäßen Kupplungsbetätigungsvorrichtung;

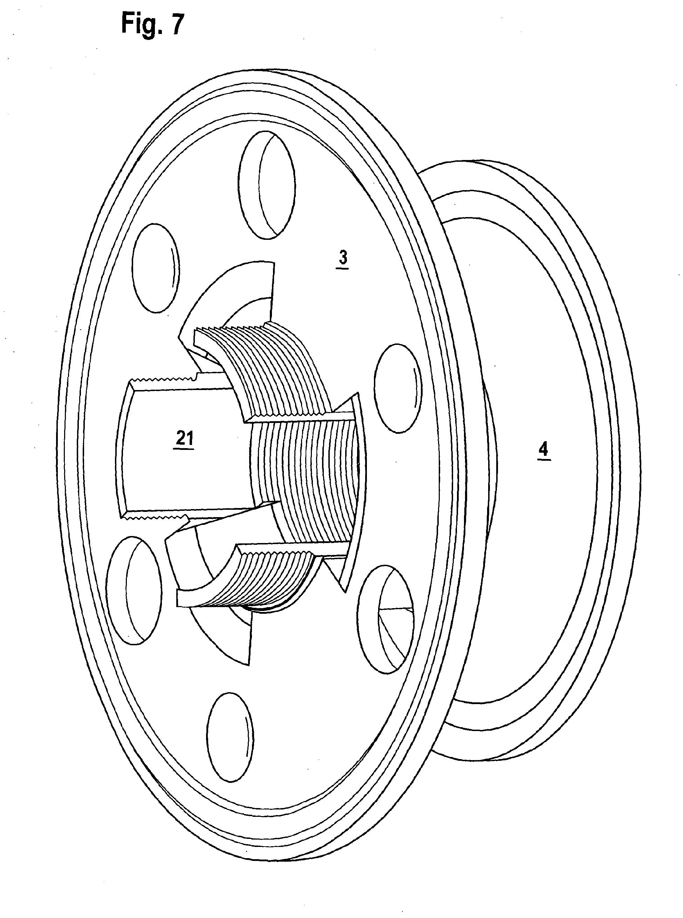

Figur 7 eine perspektivische Ansicht einer Verstellplatte und einer Führungshülse der erfindungsgemäßen Kupplungsbetätigungsvorrichtung;

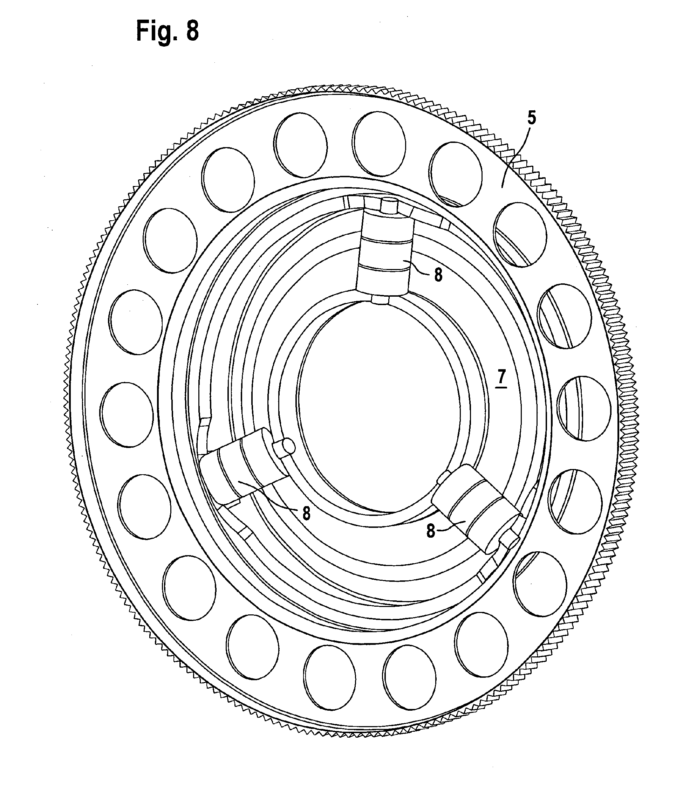

Figur 8 eine perspektivische Ansicht eines Rollenhalters mit einem Zahnrad und der Rolleneinheiten der erfindungsgemäßen Kupplungsbetätigungsvorrichtung;

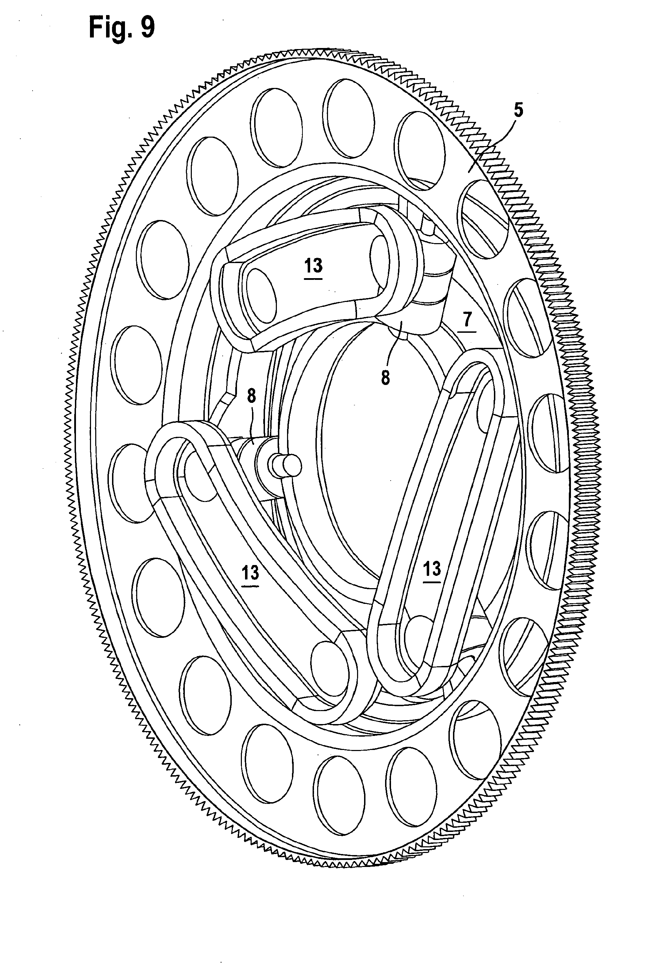

Figur 9 eine perspektivische Ansicht der Hebel im Rollenhalter der erfindungsgemäßen Kupplungsbetätigungsvorrichtung;

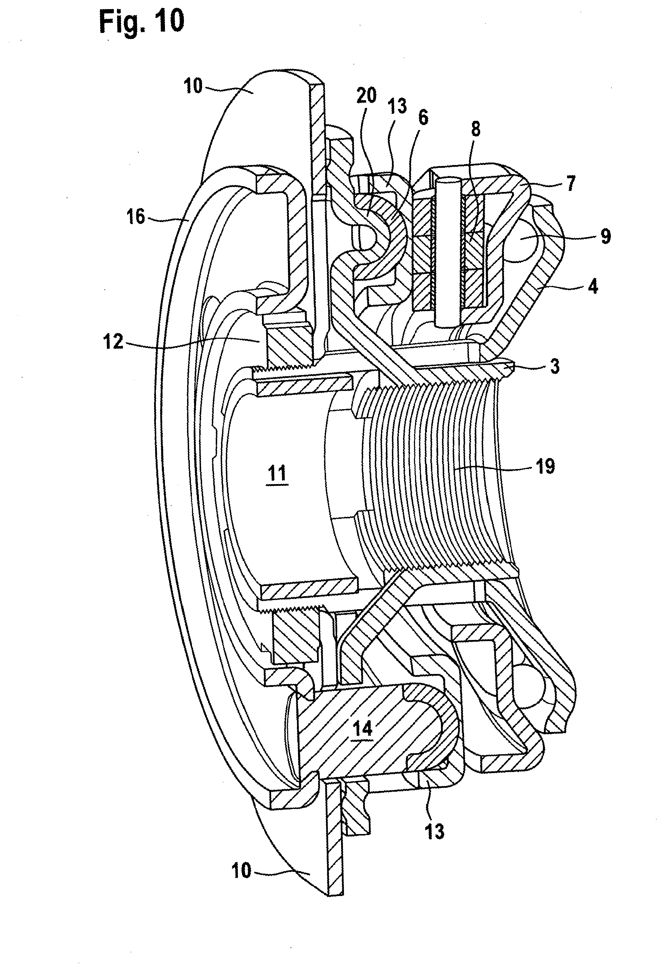

Figur 10 eine perspektivische Ansicht einer "starr" zu verdrehenden Ausrückeinheit bei der Verstellung der erfindungsgemäßen Kupplungsbetätigungsvorrichtung

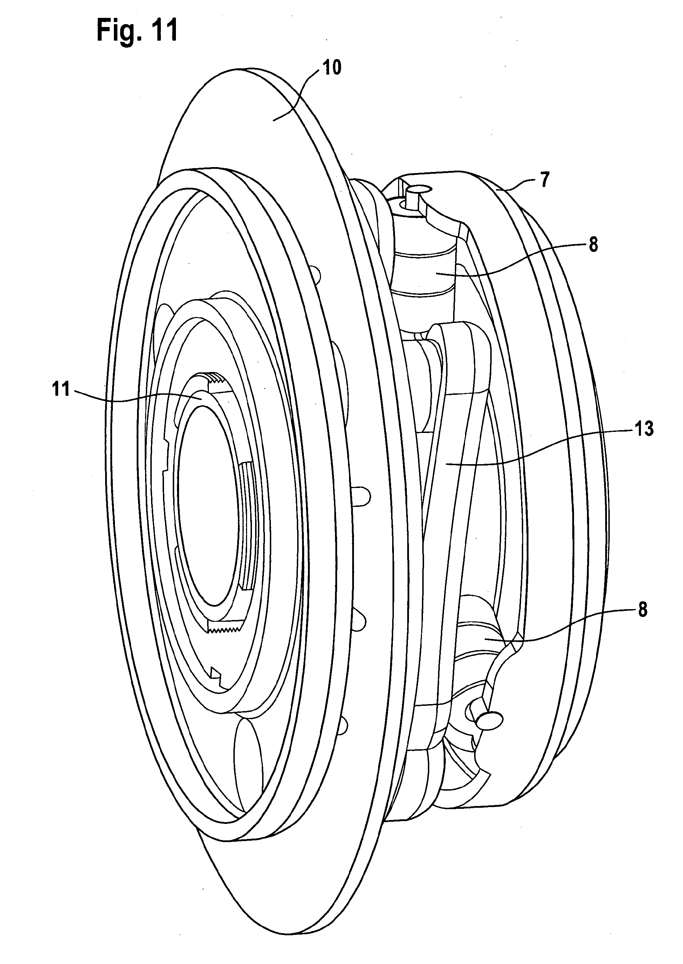

Figur 11 eine weitere Ansicht der starr zu verdrehenden Ausrückeinheit bei der Verstellung der erfindungsgemäßen Kupplungsbetätigungsvorrichtung.

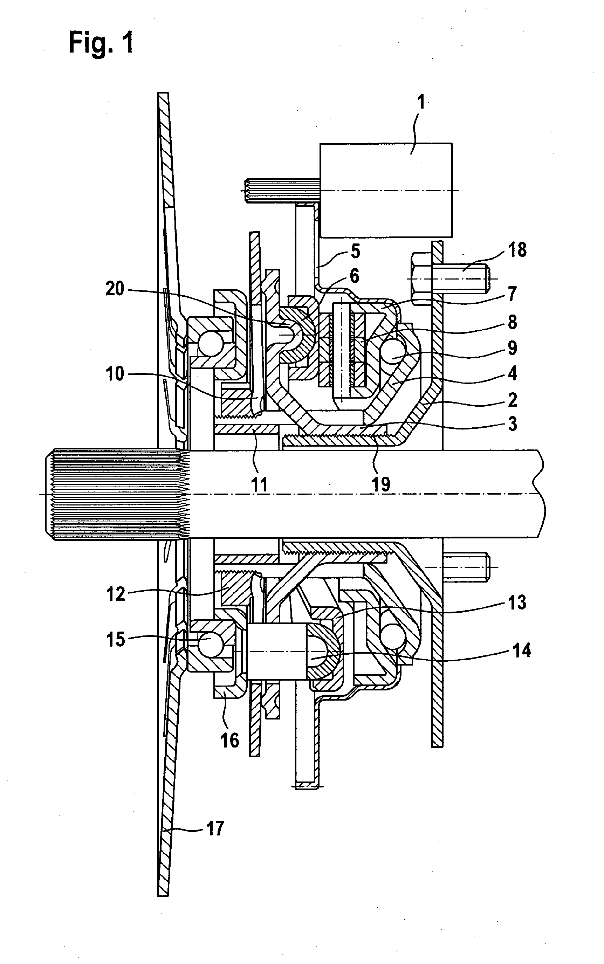

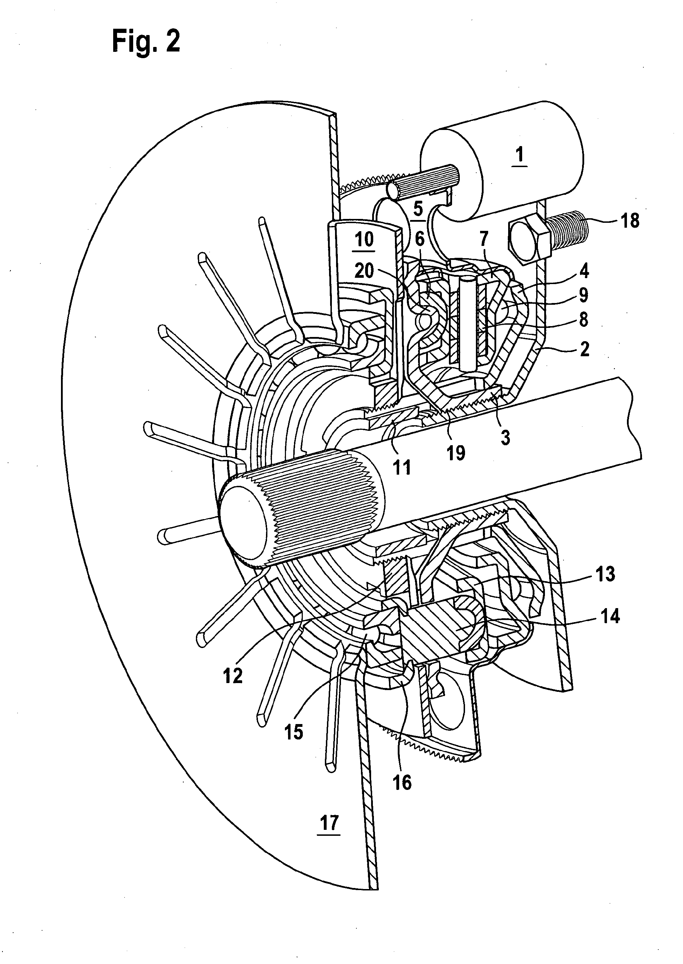

In der Figur 1 und 2 ist die erfindungsgemäße Kupplungsbetätigungsvorrichtung gezeigt. Auf einem Getriebegehäuse (nicht dargestellt) ist eine Grundplatte 2 mittels Schrauben 18 befestigt. Die Grundplatte 2 besitzt ein selbsthemmendes Feingewinde 19. Auf dieses Feingewinde 19 in Form eines Außengewindes wird eine so genannte Verstelleinheit bzw. das Ausrücksystem - bestehend im wesentlichen aus einer Verstellplatte 3, einer Führungshülse 4, einem Rollenhalter 7, Rolleneinheiten 8, einer Hilfstellerfeder 10, einem Druckring 16, einer Einstellmutter 12, Hebeln 13 und einem Pressring 11 - durch die Verstellplatte 3 aufgeschraubt, die das entsprechende Innengewinde aufweist. Die Verstellplatte 3 hat drei kugelförmige Ausprägungen 20, auf denen drei Gelenklager 6 aus einem Gleitlagermaterial aufgesteckt sind. Auf diesen Gelenklagern 6 stützen sich drei tangential ausgerichtete Hebel 13 an jeweils einem Ende eines jedes Hebels 13 ab. Die anderen Enden der Hebel 13 sind durch drei andere Gelenklager auf drei Stufenbolzen bzw. Bolzen 14 abgestützt, die wiederum mit einem Druckring 16 vernietet sind.

Der Druckring 16 drückt auf ein Ausrücklager 15 der Kupplung, welches eine Haupttellerfeder 17 betätigt. Auf den drei Hebeln 13 laufen drei wälzgelagerten Rolleneinheiten 8, die in jeweils einem Rollenhalter 7 befestigt sind. Die Rollenhalter 7 sind durch einen Kugelkranz eines Wälzlagers 9 in einer Führungshülse 4 verdrehbar gelagert. Die Verdrehung des Rollenhalters 7 geschieht durch ein Zahnrad 5, das mit dem Rollenhalter 7 verdrehfest verbunden ist. Das Zahnrad 5 wird durch den am Getriebegehäuse befestigten Elektromotor 1 angetrieben.

Die Führungshülse 4 hat drei Zungen 21, die durch die entsprechenden Aussparungen der Verstellplatte 3 durchgesteckt werden. Die Zungen 21 haben ein Außengewinde, worauf sich eine Wellenmutter bzw. Einstellmutter 12 befindet. Die Einstellmutter 12 drückt auf die Zungen einer Hilfstellerfeder 10, die an ihrem Außendurchmesser auf der Verstellplatte 3 abgestützt ist. Dadurch wird die ganze Einheit mit den Hebeln 13 vorgespannt. Die erforderliche Winkellage der Hilfstellerfeder 10 wird durch die Einstellmutter 12 eingestellt. Die Einstellmutter 12 wird durch einen Pressring 11, der in die Führungshülse 4 nachträglich eingepresst wird, gesichert.

Verdreht man den Rollenhalter 7, so laufen die Rollen der Rolleneinheit 8 auf dem zugeordneten Hebel 13 ab, wodurch das Hebelverhältnis zwischen Hilfstellerfeder 10 und Haupttellerfeder 17 geändert und dadurch die Führungshülse 4 mit der ganzen Rolleneinheit samt Druckring 16 in Richtung Kupplung verschoben und dadurch die Kupplung ausgerückt wird. Die Hebel 13 weisen die erforderliche Wippkurve auf, wodurch ein Kräfte- und Energiegleichgewicht zwischen den zwei Tellerfedern entsteht.

Besonders hervorzuheben ist bei der vorliegenden Erfindung die kugelgelenkige Einhängung der Hebelenden der Hebel 13, wodurch kein Kantenträger bei der Verkippung entsteht.

Zudem übernimmt das Ausrücklager 15 zusätzlich die Verdrehungsbewegung des Druckrings 16, die durch die axiale Bewegung der Hebel 13 zwangsmäßig entsteht und die bei bisher bekannten Kupplungsbetätigungsvorrichtungen starke Reibung verursacht hatte.

Jede Rolleneinheit 8 ist in drei einzeln gelagerte Rollen aufgeteilt, wodurch die Bohrreibung, die bei den sehr breiten Hebeln für eine LKW-Anwendung entsteht, minimiert wird.

Mindestens zwei Rollen pro Rolleneinheit 8 haben gleichzeitig eine Berührung mit dem zugeordneten Hebel 13.

Mit der Einstellmutter 12 können die Toleranzen innerhalb des Ausrücksystems ausgeglichen werden, die zu einer besseren Ausnutzung der Kompensationskennlinie führt.

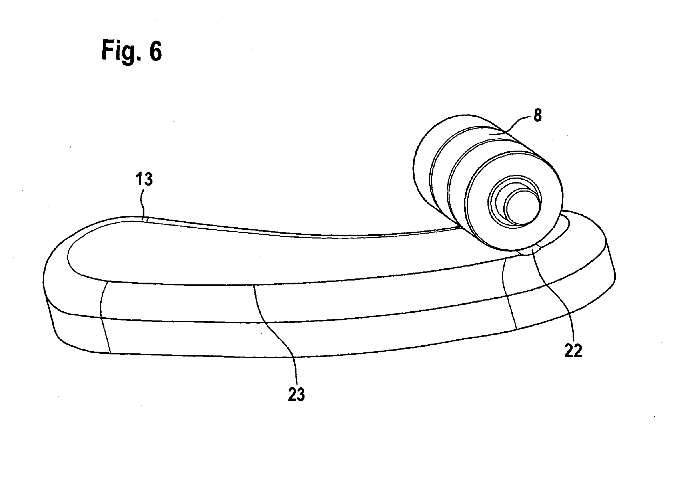

Die Hebel 13 weisen am Beginn der Wippkurve 23 eine radial verlaufende Einprägung 22 auf, wie man in der Figur 6 sehen kann. Die Rollen befinden sich z. B. im offenen Zustand einer zugedrückten Kupplung in diesen Einprägungen 22. Wenn man versucht die Rollenhalter 7 zu verdrehen, so "sehen" die Rollen der Rolleneinheit 8 zuerst einen Verdrehwiderstand, da sie durch die Hilfstellerfeder 10 in die Einprägungen 22 gedrückt werden. Wenn die Kupplungskennlinie weggewandert ist, so wird dadurch zuerst das komplette Ausrücksystem als starre Einheit in Richtung Kupplung über das Feingewinde 19 auf der Grundplatte 2 verdreht und dadurch axial verschoben und erst dann, wenn die Zungen der Haupttellerfeder 17 eine gewisse Gegenkraft aufbauen, rollen die Rolleneinheiten 8 aus den Einprägungen 22 heraus, da die Reibung im Feingewinde 19 immer größer wird und die Grundplatte 2 dann stehen bleibt. Die aufgebaute Einrückkraft wird durch das selbsthemmende Feingewinde 19 ohne Verdrehung axial aufgenommen. In der anderen Verdrehrichtung gehen die Hebel 13 auf Anschlag und die ganze Einheit lässt sich als starre Einheit durch den Elektromotor 1 wiederum verdrehen. So kann die Verstellung in beiden Richtungen mit einem einzigen Elektromotor jeder Zeit realisiert werden.

Der Elektromotor 1 sitzt auf einem großen Durchmesser außerhalb des Getriebegehäuses, so dass die erforderliche Übersetzung gegeben ist und die thermische Belastung des Elektromotors gering gehalten werden kann.

Die Kupplungsbetätigungsvorrichtung in Form eines Drehhebelaktors nach der vorliegenden Erfindung steht als alternative Lösung für die Betätigung einer LKW-Kupplung zur Verfügung, wenn beispielsweise keine Pneumatik an dem LKW vorhanden ist.

Mit der vorliegenden Erfindung ist es möglich, eine sehr kompakte Kupplungsbetätigungsvorrichtung zu schaffen, die als Drehhebelaktor für die Kompensation der Kupplungskennlinienverschiebung mit Rückstellmöglichkeit bei ungenauer oder ungewollter Kompensation für die Betätigung einer Kupplung oder Bremse einzusetzen ist.

### Bezugszeichenliste

- 1: Elektromotor
- 2: Grundplatte
- 3: Verstellplatte
- 4: Führungshülse
- 5: Zahnrad
- 6: Gelenklager
- 7: Rollenhalter
- 8: Rolleneinheit
- 9: Wälzlager
- 10: Hilfstellerfeder
- 11: Pressring
- 12: Einstellmutter
- 13: Hebel
- 14: Bolzen
- 15: Ausrücklager
- 16: Druckring
- 17: Haupttellerfeder
- 18: Schraube
- 19: Feingewinde
- 20: Ausprägung
- 21: Zunge
- 22: Einprägung
- 23: Wippkurve

## Patentansprüche

1. Kupplungsbetätigungsvorrichtung, insbesondere zur Betätigung einer Kupplung eines Fahrzeuges, mit mindestens einer Feder, deren Federkraft zur Betätigung der Kupplung mittels einer zugeordneten mechanischen Kraftübertragungsstrecke auf die Kupplung übertragbar ist, **dadurch gekennzeichnet, dass** die Kraftübertragungsstrecke zumindest ein verlagerbares Kraftübertragungselement umfasst, welches als tangential zu einer Rotationsachse der Kupplung angeordneter kugelgelenkartig gelagerter Hebel (13) ausgebildet ist.

2. Kupplungsbetätigungsvorrichtung nach Anspruch 1, **dadurch gekennzeichnet, dass** mehrere Kraftübertragungselemente gleichmäßig über den Umfang verteilt vorgesehen sind.

3. Kupplungsbetätigungsvorrichtung nach Anspruch 1 oder 2, **dadurch gekennzeichnet, dass** die Kraftübertragungselemente gleichmäßig über den Umfang verteilt und dreifach vorgesehen sind.

4. Kupplungsbetätigungsvorrichtung nach einem der Ansprüche 1 bis 3, **dadurch gekennzeichnet, dass** jeder Hebel (13) an zwei Abstützpunkten kugelgelenkartig gelagert ist.

5. Kupplungsbetätigungsvorrichtung nach einem der Ansprüche 1 bis 4, **dadurch gekennzeichnet, dass** jedes Kraftübertragungselement mittels einer zugeordneten Rolleneinheit (8) betätigbar ist.

6. Kupplungsbetätigungsvorrichtung nach Anspruch 5, **dadurch gekennzeichnet, dass** die Rolleneinheit (8) auf einer Kreisbahn bewegbar ist und mit dem Hebel (13) einen dritten Kontaktpunkt ausbildet.

7. Kupplungsbetätigungsvorrichtung nach Anspruch 5 oder 6, **dadurch gekennzeichnet, dass** die Rolleneinheit (8) drei Rollen umfasst, wobei zumindest zwei Rollen immer Kontakt zum Hebel (13) haben.

8. Kupplungsbetätigungsvorrichtung nach Anspruch 6, **dadurch gekennzeichnet, dass** jeder Hebel (13) eine Wippkurve (23) und eine Einprägung (22) aufweist.

9. Kupplungsbetätigungsvorrichtung nach einem der Ansprüche 5 bis 8, **dadurch gekennzeichnet, dass** durch Verlagerung der Rolleneinheit (8) ein Verschwenken des Hebels (13) bewirkt wird.

10. Kupplungsbetätigungsvorrichtung nach einem der Ansprüche 1 bis 9, **dadurch gekennzeichnet, dass** die Feder als Tellerfeder oder Tellerfederpaket vorgesehen ist sowie eine Hilfstellerfeder (10) vorgesehen ist.

11. Kupplungsbetätigungsvorrichtung nach einem der Ansprüche 5 bis 10, **dadurch gekennzeichnet, dass** die Rolleneinheiten (8) in einem gemeinsamen, verdrehbaren Rollenhalter (7) gelagert sind.

12. Kupplungsbetätigungsvorrichtung nach Anspruch 11, **dadurch gekennzeichnet, dass** der Rollenhalter (7) von einem Elektromotor (1) angetrieben ist.

13. Kupplungsbetätigungsvorrichtung nach einem der Ansprüche 10 bis 12, **dadurch gekennzeichnet, dass** durch Verdrehen der Rolleneinheit (8) der zugeordnete Hebel (13) verlagert wird und sich **dadurch** das Hebelverhältnis zwischen der Feder und der Hilfstellerfeder (10) verändert.

14. Kupplungsbetätigungsvorrichtung nach Anspruch 12 oder 13, **dadurch gekennzeichnet, dass** eine axiale Position der Kraftübertragungsstrecke als Teil eines Ausrücksystems mittels des Elektromotors (1) verstellbar ist.

15. Kupplungsbetätigungsvorrichtung nach Anspruch 14, **dadurch gekennzeichnet, dass** die Verstellung der axialen Position zur Kompensation der Kupplungskennlinienverschiebung dient.
